Europäisches Patentamt

European Patent Office

Office européen des brevets

(11) Publication number: 0 687 589 A1

# EUROPEAN PATENT APPLICATION

(21) Application number: 95201339.9

(22) Date of filing: 23.05.95

(51) Int. Cl.⁶: **B60N 2/42**

(30) Priority: **09.06.94 US 257081**

(43) Date of publication of application:
**20.12.95 Bulletin 95/51**

(84) Designated Contracting States:
**DE ES FR GB IT**

(71) Applicant: **Top Source Technologies
Incorporated
2000 PGA Boulevard,
Suite 3200
Palm Beach Gardens,
Florida 33408-2713 (US)**

(72) Inventor: **Singer, Neil
1 Ouarter Mile Road
Armonk,
NY 10504 (US)**
Inventor: **Derezinski, Stephen J., III
242 Bedford Road
Pleasantville,
NY 10570 (US)**

(74) Representative: **Wharton, Peter Robert
Urquhart-Dykes & Lord
Inventions House
Valley Court, Canal Road
Bradford BD1 4SP (GB)**

(54) **Safety seat trajectories**

(57) A vehicle seat assembly (10) utilized in vehicles (12) to minimize injury to an occupant resulting from submarining thereof utilizes a movable seat (16) which increases the effective restraining force provided by the seat (16). The movement of the seat (16) is defined through a vertical travel trajectory and a rotational movement trajectory, both with respect to forward seat travel. A reference point (28) is defined on the seat following the vertical travel trajectory which is substantially zero or in a downward direction preventing movement in the upwardly vertical direction as the seat travels forward, and the rotational movement trajectory which is linear or concave of increasing angle during substantially the initial half of forward seat travel. The seat movement also is defined by moving the front seat side (26) a first vertical distance along a front path and moving the rear seat side (26) a second vertical distance less than the first vertical distance while preventing upward vertical movement of the rear seat side.

Fig. 10

## TECHNICAL FIELD

The invention relates to vehicle seats which are movable in response to a collision to enhance restraint of the occupant in the vehicle seat.

## BACKGROUND OF THE INVENTION

There is continued development of providing sufficient safety to vehicle passengers upon collision of a vehicle. Many approaches to protect occupants during vehicle impact have been proposed and studied. Such approaches include the use of active lap and shoulder belts, passive shoulder belts, and air bags which inflate upon impact. Both air bags and passive shoulder belts or harnesses offer some protection, but there is a tendency of the occupant to submarine beneath the shoulder harness or air bag, thereby sustaining more injury.

There have been extensive proposals of seats which move with respect to the vehicle under the influence of inertia loads resulting from rapid deceleration during a crash. These prior proposals typically tilt the seat cushion upward while simultaneously moving forward in an effort to maintain the occupant in the vehicle seat. Exemplary of such moving seats include United States Patent Number 2,102,979, issued December 21, 1937 in the name of Smith; United States Patent Number 4,738,485, issued April 19, 1988 in the name of Rumpf; United States Patent Number 3,998,291, issued December 21, 1976 in the name of Davis; United States Patent Number 5,022,707, issued June 11, 1991 in the name of Beauvais et al; and United States Patent Number 5,244,252, issued September 14, 1993 in the name of Serber. Each of these patents disclose various movements of the seat with respect to the vehicle upon impact.

However, it is desirable to move the seat upon impact in specified trajectories to minimize the potential of injury in specified vehicles. The prior art fails to provide an optimal trajectory to minimize occupant injury upon impact or high deceleration in consideration of actual vehicle design and constraints.

## SUMMARY OF THE INVENTION

The invention relates to a vehicle seat assembly adapted to be connected in a vehicle for minimizing occupant injury upon an impact thereof. The seat assembly includes a seat for connection to a vehicle including a back portion extending in a substantially upward vertical direction from a lower back end and a seat portion extending in a substantially horizontal direction from a rear seat side connected adjacent the lower back end of the back portion and including a front seat side opposing the rear end. A central gravity point is defined as located in proximity to the lower end and the rear seat side. Also included is seat support means operatively connected to the seat and the vehicle for controlling movement of the seat with respect to the vehicle upon vehicle impact defined by the reference point following a vertical travel trajectory with respect to horizontal seat travel as being substantially zero or in the a downward direction preventing movement in the upward direction and having a rotational movement trajectory with respect to the horizontal seat travel as being linear or concave extending in the upwardly vertical direction during substantially the initial half of the forward seat travel. The movement is also defined by moving the forward seat side a first vertical distance in the upward direction along a front path and moving the rear seat side a second vertical distance along a rear path less than the first vertical distance while preventing upward vertical movement of the rear seat side.

A method of moving a vehicle seat upon impact of a vehicle includes the steps of: detecting a predefined inertia force on the seat representative of the impact, moving the seat in response to the predefined inertia so that the reference point follows a vertical trajectory and a rotational trajectory, the vertical trajectory defined by the reference point moving a vertical distance as the seat travels forwardly as zero or in the downward vertical direction preventing movement in the upwardly direction, and the rotational trajectory defined by the reference point rotating the seat as the seat travels forwardly by increasing linear or concave path representing change in angle of the seat; moving the front seat side a first vertical distance along a front path and moving said rear seat side a second vertical distance along a rear path less than said first vertical distance while preventing upward vertical movement of said rear seat side.

The trajectories are developed to optimize a cost function, i.e., the optimization of various measured injury-related variables such as neck's flexon moment, neck's extension moment, femur load, etc. The minimization of injury takes into account the crash pulse of the vehicle (pulse acceleration verses time), which is variable in terms of the time of maximum pulse and the magnitude thereof depending on the design of the vehicle. Further variables are considered in selecting and optimizing the trajectory, namely structural parameters of the vehicle such as header space, instrument panel location, etc.

The subject invention reduces the potential for injury during a head-on collision by reducing lower body motion. The assembly operates in conjunction with upper body restraint systems, such as shoulder harnesses and air bags. The assembly provides lower body restrain by increasing the effective restraining force provided by the seat cushion.

FIGURES IN THE DRAWINGS

Other advantages of the present invention will be readily appreciated as the same becomes better understood by reference to the following detailed description when considered in connection with the accompanying drawings wherein:

Figure 1 is a diagrammatic view of a seat in the vehicle;

Figure 2 is a graph illustrating vertical movement of the seat verses forward seat travel for the embodiments of the subject invention;

Figure 3 is a graph illustrating change in rotation or angle of seat verses forward seat travel for the various embodiments of the subject invention;

Figure 4 is a graph illustrating movement of the front and rear seat sides of the first embodiment;

Figure 5 is a graph illustrating movement of the front and rear seat sides of the second embodiment;

Figure 6 is a graph illustrating movement of the front and rear seat sides of the third embodiment;

Figure 7 is a graph illustrating movement of the front and rear seat sides of the fourth embodiment;

Figure 8 is a side elevational view showing the first embodiment of the seat in its normal operating position using pins and slots;

Figure 9 is a side elevational view showing the seat of Figure 8 upon initial movement of the seat during impact;

Figure 10 is a side elevational view of the seat of Figure 8 in its fully travelled position;

Figure 11 is a side elevational view of the third embodiment of the seat in the normal operating position;

Figure 12 is a side elevational view of Figure 11 in its initially move position; and

Figure 13 is a side elevational view of Figure 11 in its fully travelled position.

DESCRIPTION OF THE PREFERRED EMBODIMENT

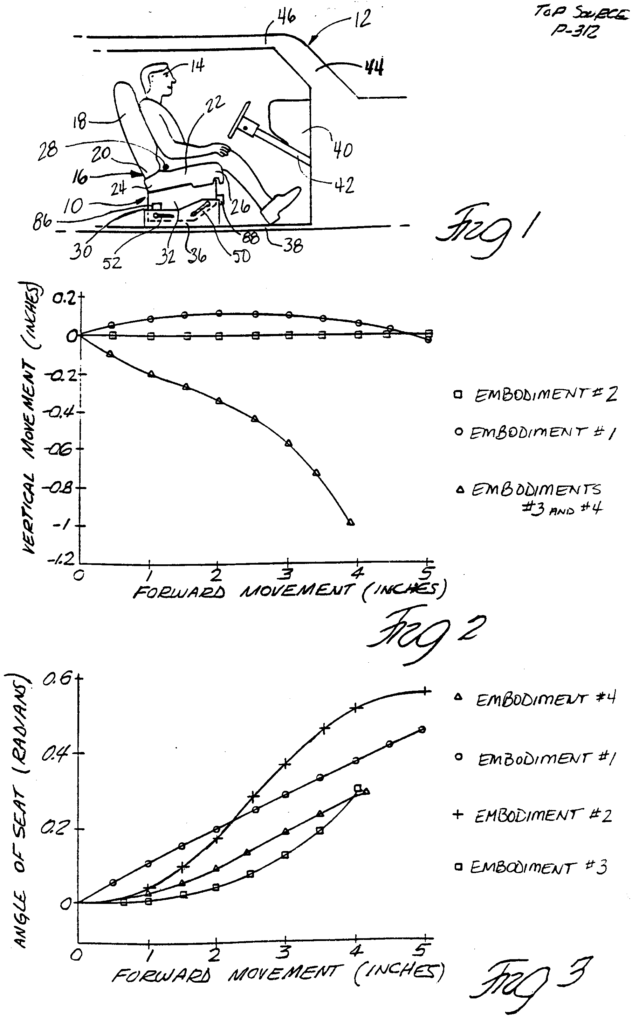

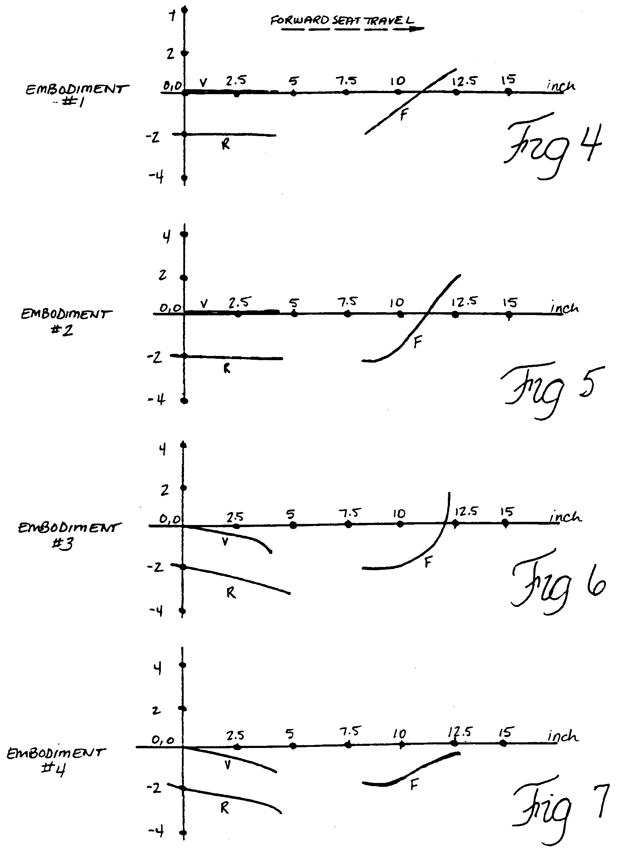

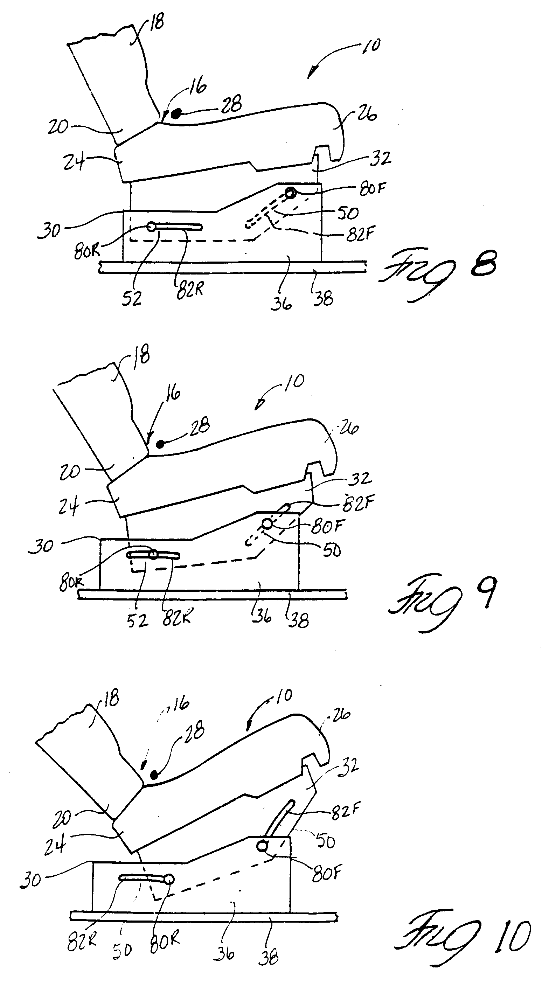

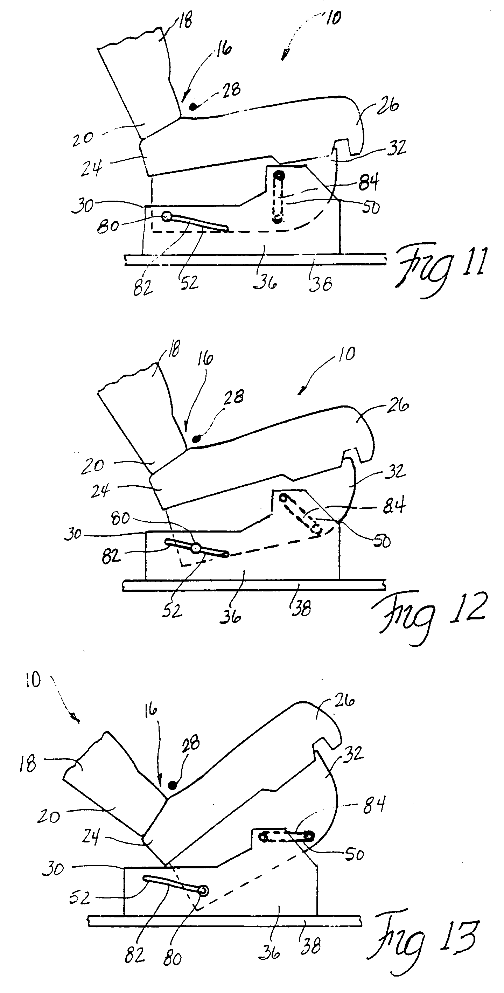

A vehicle seat assembly 10 adapted to be connected in a vehicle 12 for minimizing occupant 14 injury upon an impact of the vehicle 12 by increasing the effective restraining force provided by the seat is generally illustrated in Figure 1. The vehicle seat assembly 10 generally includes a seat 16 for connection to the vehicle 12. The seat 16 includes a back portion 18 extending in a substantially upwardly vertical direction from a lower back end 20. The seat 16 also includes a seat portion 22 extending in a substantially horizontal direction from a rear seat side 24 connected adjacent the lower back end 20 of the back portion 18 to a front seat side 26 opposing said rear seat side 24. In the preferred embodiment illustrated in Figure 1, the back portion 18 is fixedly secured to the seat portion 22 such that the back portion 18 moves with the seat portion 22 as is commonly known in the art. However, it is to be understood that a stationary back portion may be provided with the movable seat portion 22.

Defined on the seat is a central or reference point 28 located in proximity to the hip pivot location or H-point of the seat near the lower back end 20 and the rear seat side 24 (see Figure 1). The reference point 28 may be the approximate center of gravity of the seat of the seat 16 thereon as illustrated or in general proximity thereof. Merely any point may be selected to determine the trajectories of the seat 16 by the reference point 28. The reference point 28 is specifically defined in relation to the hinge point (center of hinge between the back portion and the seat portion) as 118mm toward the front of the car from the hinge point and 29.5mm above the hinge point.

The assembly 10 also includes a seat support means or apparatus 30 operatively connected between the seat 16 and the vehicle 12 for controlling movement of the seat 16 with respect to the vehicle 12 upon a collision. The seat support apparatus 30 is more specifically connected directly to the seat portion 22 and mounted to the vehicle 12 at the floor thereof as commonly known in the art. The seat portion 22 generally includes a seat frame 32 supporting a cushion thereon, as also commonly known in the art. The seat frame 32 is generally connected to a support floor frame 36 of the vehicle 12. The support floor frame 36 is fixedly secured to the floor 38 of the vehicle 12. The vehicle 12 generally includes an instrument panel 40 extending from the floor 38 and a steering wheel/column 42. Extending from the instrument panel 40 is generally the window 44 extending to a structural header 46 at the top of the vehicle. These elements and specific locations in the vehicle 12 with respect to the seat 16 must be taken into consideration when developing the suitable trajectory or path of movement the seat 16 will follow upon impact. Different injuries will occur based on this relative positioning and the crush characteristics of the interior elements of the vehicle.

The seat 16 is configured to move in a defined path to minimize injury to the occupant 14 based on characteristics of the vehicle 12, including instrument panel 40 and header 46 positioning and spacing. Movement of the seat 16 in the predefined path allows for passive restraint of the occupant 14 by maintaining occupant 14 in the seat 16. More particularly, movement of the seat 16 prevents submarining of the occupant during high deceleration which causes the occupant to slide down along the seat portion 22 and under the steering wheel 42 into the instrument panel 40.

The seat 16 provides lower body restraint by allowing the seat 16 to move so that the effect of the collision and deceleration is to hold the occupant in the seat 16. Any upward seat acceleration increases the magnitude of the effective gravity vector, thus increasing the frictional force holding the passenger in the seat 16. Angular rotation of the seat 16 also increases the frictional forces, as well as moving more of the seat cushion between the occupant and the instrument panel 40.

The seat support apparatus 30 provides the controlled movement of the seat 16. The movement can be defined by the trajectory or path that reference point 28 and travel of the rear and forward seat sides 24, 26. The reference point 28 follows a vertical travel trajectory and a rotational movement trajectory both with respect to forward seat travel. The vertical travel trajectory is broadly defined as being substantially zero or in an increasing downward vertical direction preventing movement in the upward vertical direction. The rotational movement trajectory is broadly defined as being increasing upwardly along a linear or concave path during substantially the initial half of horizontal seat travel. The forces generated during a collision cause the seat 16 to slide forward and tilt back as it moves forward. The front seat side 26 of the seat 16 moves upwards, while the rear seat side 24 starts moving forward and possibly down. The vertical travel trajectory moves the reference point 28 less than 1.0 inch in the downward direction without movement in the upwardly vertical direction. The rotational movement component moves the reference point 28 with increasing change in angle in the upwardly vertical direction less than 0.6 radians and greater than 0.2 radians.

The seat support apparatus 30 controls the front seat side 26 to move a first vertical distance in generally the upward direction along a front path as the seat 16 travels forwardly, and the rear seat side 24 to move along a second vertical distance along a rear path which second vertical distance is less than the first vertical distance while preventing upward vertical movement of the rear seat side 24.

It is desirable to initially allow the seat 16 to follow a straight horizontal path, or slightly downward so that the seat 16 can gain momentum and subsequently be moved into the restraining rotated position. The seat 16 must be allowed to come up to speed without any force from the occupant (other than its weight). The seat 16 must move with the occupant during the initial movement, or it will not provide the required restraining effect. If it is attempted to restrain the occupant while the seat is initially accelerating, the seat 16 will not act quick enough and fall behind. With the trajectory having initial zero slope, the seat 16 will initially travel with the occupant. Once the seat 16 is up to speed, the seat 16 can begin to "capture" the occupant by changing the trajectory from straight. However, the seat 16 cannot drop too quickly or the occupant will lose contact with the seat 16 and the occupant will move too far ahead of the seat 16. The seat 16 and trajectory must always keep contact with the occupant's lower torso and upper legs. See embodiments #2-4.

The different embodiments of the paths or trajectories of the vertical travel and rotational movement of the reference point 28 are illustrated in Figures 2-3. Embodiments #1 and #2 are related and are for use in the Chrysler B-van. Embodiment #2 is directed toward a theoretical trajectory of optimized cost function and embodiment #1 is an approximated trajectory based on the theoretical trajectory of a built model with cost and manufacture considerations. The third and fourth embodiments #3 and #4 are related and are for use in the Chrysler S-van. Embodiment #4 is the optimized theoretical trajectory, and the embodiment #3 approximates the theoretical trajectory as a built model. These embodiments differ from the prior art and provide for optimized cost function values for specific vehicles as defined by the trajectories of the reference point 28 and movement of the rear and front seat ends 24, 26.

The modifications from the theoretical trajectories to the built trajectories is that the theoretical trajectories are based on optimization of the cost function without practical building considerations, whereas the built trajectory are approximated theoretical ones to accommodate a sturdy, buildable trajectories. A simulation was performed on each trajectory and the injury scores compiled. Using a weighing factor and each injury score in "percent of allowable", the lowest score was chosen as the optimal trajectory as if disclosed in U.S. Patent Number _____ (pending), Serial Number 182,511, filed January 13, 1994.

To implement each of the trajectories of the various embodiments, the seat support apparatus 30 includes a forward control assembly or means 50 connected adjacent the front seat side 26 and a rearward

4

control assembly or means 52 connected adjacent the rear seat side 24. The forward control assembly 50 is constructed to move the front seat side 26 the first vertical distance as it moves along a front path F. The rearward control assembly 52 is constructed to move the rear seat side 24 the second vertical distance as it moves along a rear path R with the second vertical distance less than the first vertical distance while preventing any upward vertical movement of the rear seat side 24. The four embodiments of front and rear paths are illustrated in Figures 4-7 which implementation result in the vertical travel (V) and rotational movement trajectories of Figures 2 and 3. The forward control means 50 controls movement of the front seat side 26 to less than 4 inches in the upwardly vertical direction. The rearward control means 52 controls movement of the rear seat side 24 to less than 1 inch in the downwardly vertical direction.

In embodiments #1, #2 and #4, the forward and rearward control assemblies 50, 52 generally comprise a pin or rollers 80 which extend outwardly from each seat side 24, 26 at the seat frame 32 and engage in slots 82 constructed in the support frame 36 to control movement along the front and rear paths. Therefore, Figures 4-7 illustrate the path of movement on the front and rear pins 80 of the seat 16. One outward side of the seat 16 is illustrated with the other side being identical. In embodiment #3, a rear slot 82 and pin 80 combination is utilized with a pivotal link 84 connected to the front seat side 26. It is to be understood that any type of control assembly may be utilized, though simplistic implementations are illustrated herein. It is within the scope of the invention that one skilled in the art will understand that different types of components and links may be utilized in place of those shown to follow the trajectories or movement herein disclosed. However, the importance is to implement assemblies to control the seat 16 to follow the trajectories as illustrated, both vertical and rotational and along the front paths 54 and rear paths 56.

Figures 4 and 8-10 illustrate the first embodiment #1 of the assembly 10 wherein the pins 80 and slots 82 are utilized to implement the movement of the seat 16 with respect to the vehicle 12 upon impact. On the floor support frame 36 are included a rear slot 82R and a forward pin 80F which engage the seat frame 32 including a rear pin 80R and a forward slot 82F. In regard to the trajectories of the reference point 28 (coordinates 0,0 in the Figures), the vertical movement trajectory as the seat travels forwardly is substantially horizontal (zero) with the slight vertical change during the middle of forward movement. The vertical travel trajectory (z) begins and ends at relative zero at the beginning and end forward movement with a slight vertical curve providing vertical movement of approximately 0.1 inches (Figure 2). The rotational movement trajectory ($\theta$) is generally defined by a straight, linearly increasing trajectory starting at relative 0 and changing 0.4 radians over the approximate five inches of forward travel (Figure 3). The forward control assembly 50 moves the front side 26 of the seat 16 in a upwardly angled, straight path starting at (x = forward travel, z = vertical travel) (8, -2) and ending at (12.5, 2). The rearward control assembly 52 moves the rear side 24 of the seat 16 along a straight horizontal path of zero vertical change starting at (-1, -2) and ending at (-4, -2). This embodiment #1 represents the built assembly for the B-van which approximated the theoretical trajectory of embodiment #2. The built trajectory was modified from theoretical to:

$$x = 0 \rightarrow 5 \text{ inches}$$
$$\theta(x) = 0.11171x - 0.00921x^2 + 0.00235x^3 - 0.000472479x^4 + 0.0000399686x^5$$
$$z(x) = 0.10123x - 0.02107x^2 - 0.00474x^3 + + 0.00191x^4 - 0.000196444x^5$$

The injury scores were:

| FEM | NEM | NFM | HDR | HIC | HDG | CHG |
|------|------|------|------|------|------|------|
| 1240 | 333 | 376 | 3 | 366 | 66 | 44 |

Where:

FEM = Average Femur Compression Load between the Right and Left Femurs (lbs)
NEM = Neck's Extension Moment (in-lbs)
NFM = Neck's Flexon Moment (in-lbs)
HDR = Header Clearance (inches) (no required score)
HIC = Head Injury Criteria (dimensions)
HDG = Peak Resultant Head G's (G's)
CHG = Peak Chest G's over 3 ms in duration (G's)

The maximum allowable injury scores per FMVSS-208 (government requirements) are:

| FEM | NEM | NFM | HDR | HIC | HDG | CHG |
|------|-----|------|-----|------|-----|-----|
| 2250 | 504 | 1690 | N/A | 1000 | 60 | 60 |

Figure 5 illustrates the second embodiment #2 of the subject assembly 10 following the second trajectory. This embodiment #2 represents the theoretical trajectories upon which embodiment #1 was based. The rotational movement trajectory ($\theta$) is generally in an upwardly extending S-curve moving from an initial relative 0 angle to 0.6 radians at 5 inches forward travel (x). The vertical travel trajectory (z) is substantially horizontal, i.e., zero vertical change as illustrated in Figures 2-3. Furthermore, the seat support apparatus 30 utilizes pins 80 and slots 82 similar to the first embodiment #1. The forward control assembly 50 provides a generally concave initial path (with respect to the seat) with slight, relatively flat, S-curve characteristics at the end of travel (almost linear) and with small slope at the initial portion of travel and starting and ending at the same approximate points as in embodiment #1. The rearward control assembly 52 is in a horizontal straight path of zero vertical change the same as embodiment #1. The theoretical trajectory is specifically identified as follows for the reference point:

$$x = 0 \rightarrow 5 \text{ inches}$$
$$\theta = -0.00567x + 0.02787x^2 + 0.02355x^3 - 0.008137x^4 + 0.000648x^5$$
$$z(x) = 0.0$$

The injury scores were:

| FEM | NEM | NFM | HDR | HIC | HDG | CHG |
|------|-----|------|------|-----|-----|-----|
| 1200 | 465 | 646 | 4.17 | 431 | 71 | 44 |

Figure 6 illustrates a third embodiment of the assembly 10. The rotational movement trajectory ($\theta$) is in a generally upwardly concave path in the initial two inches of travel to a linear upwardly angled path in the remainder of forward travel to 0.2 radians, as illustrated in Figures 2-3. The vertical movement trajectory is in a downwardly linear portion extending to a downward convex path (with respect to the seat 16) as illustrated in Figures 2-3 extending from zero to approximately one inch. As illustrated in Figure 6, the forward control assembly 50 moves the front side 26 along a substantially linear path with a slight upward concave curvature (from seat view) at the initial portion of travel from approximately (8, -2) to (10, -2) and then concavity with respect to the seat 16 from (10, -2) to (12.5, 1.5). The forward control assembly 50 moves the front seat side 26 along an upwardly arcuate path by the link 84 pivoting and the rearward control assembly 52 moves the rear side 24 of the seat 16 along a linear downwardly sloping path along the slot 82. The rearward control assembly 52 moves the rear side 24 along a substantially downwardly angled linear path of slight convex curvature (with respect to seat) from (-1, -2) to (4.5, -3).

The built trajectory was modified from theoretical to:

$$x = 0 \rightarrow 4 \text{ inches}$$
$$\theta(x) = 0.0247x - 0.020395x^2 + 0.010055x^3 - 0.00052x^4$$
$$z(x) = 0.2482x - 0.08316x^2 + 0.02093x^3 + 0.000237x^4$$

The injury scores were:

| FEM | NEM | NFM | HDR | HIC | HDG | CHG |
|------|-----|------|------|-----|-----|-----|
| 1830 | 306 | 122 | 3.14 | 246 | 47 | 51 |

Figure 7 illustrates the fourth embodiment #4 of the subject assembly 10 showing the fourth trajectory. In this embodiment, the vertical travel trajectory (z) of the seat 16 is same as in the third embodiment #3. The rotational movement trajectory ($\theta$) is in a slight upwardly concave portion over the first two inches of forward travel and linearly sloping upwardly for the remaining of the trajectory up to approximately 0.6 radius. The forward control assembly 50 moves the front seat side 26 along a flattened S-curve having initial flat travel to an increasing angle from (8, -2) to (12.5, -0.5). The rearward control assembly 52 moves the rear seat side along a generally downwardly sloping linear path with slight convexity at the latter end of travel, moving from (1, -2) to (4, -3).

The theoretical trajectory is specifically defined as follows:

$$x = 0 \rightarrow 4 \text{ inches}$$
$$\theta(x) = -0.04257x + 0.07226x^2 - 0.01779x^3 + 0.00206x^4 - 0.00009088x^5$$
$$z(x) = 0.2482x - 0.08316x^2 + 0.02093x^3 + 0.000237x^4$$

The injury scores were:

| FEM | NEM | NFM | HDR | HIC | HDG | CHG |
|------|------|------|------|------|------|------|
| 1806 | 284 | 131 | 3.06 | 249 | 48 | 48 |

The assembly 10 may also include additional features as commonly known in the art, such as a dampener mechanism added between the seat frame and the vehicle to control and dampen the motion of the seat, i.e., slow the seat to a gradual stop at the end of its trajectory. The dampener minimizes the forward motion occurring from an abrupt stop when the end of the trajectory is reached.

Furthermore, an initial latch mechanism 86 may be provided to maintain the seat in its initial, fixed location until a vehicle collision impact occurs causing predetermined inertia forces. In general, the initial latch mechanism 86 releases at approximately 3G's to allow the seat 16 to move with the occupant. As will be appreciated by those skilled in the art, the large inertial forces acting on the seat during a frontal impact results in high torque causing large vertical reaction forces at the rear seat supports. The latching mechanism 86, such a retaining leaf spring, is provided to maintain the seat in its initial position during events other than high forward deceleration. Upon the occurrence of the preselected threshold deceleration rate, the latching mechanism 86 will release to allow the seat to move along its path.

It is also preferred that a latch mechanism 88 be provided to keep the seat in its fully traveled or forward position following a collision. It is desirable to have the final latch 88 hold the seat 16 in its fully traveled position through the peak of the crash pulse and slightly after the peak, usually until the occupant has had initial contact with the instrument panel.

The trajectories of embodiments #1-#4 discussed above minimize the "cost function" for specific vehicles. The cost function is generally an accumulation of various measured quantities of forces and stresses measured on a crash test dummy which are indicative of injury as previously defined, including: head injury criteria, head clearance, neck's flexion moment, neck's extension moment, chest resultant, etc. The subject assembly 10 reduces the potential for injury during a head-on automobile collision by reducing lower body motion and head collision with the vehicle header. The assembly 10 is designed to be operated in conjunction with upper body restraint system such as shoulder harnesses. It provides lower body restraint by increasing the effective restraining force provided by the bottom seat cushion. The assembly is constructed in such a way that the effect of the crash deceleration on lower body motion is reduced by an increase in the force holding the passenger in the seat. Any upward seat acceleration increases the magnitude of the effective gravity vector, thus increasing the friction force holding the passenger in the seat. Angular rotation of the seat also increases the frictional force, as well as moving more of the seat cushion between the driver and the dashboard area of the vehicle.

In addition to providing a reduced potential for injury to the lower body, the seat will neither increase the chance of injury in nonfrontal crashes, nor will it cause greater risk of injury to other body parts.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

**Claims**

1. A vehicle seat assembly adapted to be connected in a vehicle (12) for minimizing occupant injury upon an impact, said seat assembly comprising:

   a seat (16) adapted to be connected to a vehicle (12) including a back portion (18) extending in a substantially upwardly vertical direction from a lower back end (20), and a seat portion (22) extending in a substantially horizontal direction from a rear seat side (24) connected adjacent said lower back end (20) of said back portion (18) and a front seat side (26) opposing said rear seat side (24), and defining a reference point located in proximity to said lower back end (20) and said rear seat end (24);

said assembly characterized by including a seat support means (30) operatively connected between said seat (16) and the vehicle for controlling movement of said seat (16) with respect to the vehicle (12) upon vehicle impact defined by said reference point following a vertical travel trajectory with respect to horizontal seat travel as being substantially zero or in a downward direction preventing movement in the upwardly vertical direction and having a rotational movement trajectory with respect to horizontal seat travel as being linear or concave extending in the upwardly vertical direction during substantially the initial half of horizontal seat travel, and defined by moving said front seat side (26) a first vertical distance along a front path and moving said rear seat side (24) a second vertical distance along a rear path less than said first vertical distance while preventing upward vertical movement of said rear seat side (24).

2. An assembly as set forth in claim 1 further characterized by said seat support means (30) including forward control means (50) connected adjacent said front seat side (26) of said seat (16) for moving said front seat side (26) in an curving, concave path in the upwardly vertical direction.

3. An assembly as set forth in claim 2 further characterized by said seat support means (30) including rearward control means (52) connected adjacent said rear seat side (24) of said seat (16) for moving said rear seat side (24) of said seat (16) in an angular direction in the downward direction.

4. An assembly as set forth in claim 1 further characterized by said seat support means (30) including forward control means (50) connected adjacent said front seat side (26) of said seat (16) for moving said front seat side (26) in an angled direction in the upwardly vertical direction.

5. An assembly as set forth in claim 4 further characterized by said seat support means (30) including rearward control means (52) connected adjacent said rear seat side (24) of said seat (16) for moving said rear seat side (24) in a straight horizontal direction.

6. An assembly as set forth in claim 3 further characterized by said forward control means (50) and said rearward control means (52) moving said seat portion (22) with said vertical movement trajectory being angled in the downwardly direction in a substantially arcuate, concave path of increasing slope, and said rotational movement trajectory being angled in the upwardly direction.

7. An assembly as set forth in claim 5 further characterized by said forward control means (50) and said rearward control means (52) moving said seat portion and said reference point with said vertical movement component being in substantially a horizontal path, and said rotational movement component being angled in the upwardly.

8. An assembly as set forth in claim 1 further characterized by said vertical travel trajectory moving said reference point (28) less than 1.0 inch in the downward direction without movement in the upwardly vertical direction.

9. An assembly as set forth in claim 8 further characterized by said rotational movement component moving said reference point (28) with increasing angle in the upwardly vertical direction less than 0.6 radians and greater than 0.2 radians.

10. An assembly as set forth in claim 9 further characterized by said seat support means (30) including forward control means (50) connected adjacent said front seat side (26) of said seat (16) for controlling movement of said front seat side (26) of less than 4 inches in the upwardly vertical direction.

11. An assembly as set forth in claim 9 further characterized by said seat support means (30) including rearward control means (52) connected adjacent said rear seat side (24) of said seat (16) for controlling movement of said rear seat side (24) of less than one inch in the downwardly vertical direction during seat travel.

12. A method of moving a vehicle seat upon impact of a vehicle, the seat including a back portion (18) extending in a substantially upwardly vertical direction from a lower back end (20), and a seat portion (22) extending in a substantially horizontal direction from a rear seat side (24) connected adjacent the lower back end (20) of the back portion (18) and a front seat side (26) opposing the rear seat side (24), and defining a reference point located in proximity to the lower back end (20) and the rear seat end (24), the method including the steps of:

detecting a predefined inertia force on the seat (16) representative of the impact,

moving the seat (16) in response to the predefined inertia so that the reference point follows a vertical trajectory and a rotational trajectory, the vertical trajectory defined by the reference point moving a vertical distance as the seat travels forwardly as zero or in the downward vertical direction preventing movement in the upwardly direction, and the rotational trajectory defined by the reference point rotating the seat as the seat travels forwardly by increasing linear or concave path representing change in angle of the seat;

moving the front seat side (26) a first vertical distance along a front path and moving said rear seat side (24) a second vertical distance along a rear path less than said first vertical distance while preventing upward vertical movement of said rear seat side (24).

13. A vehicle seat assembly adapted to be connected in a vehicle (12) for minimizing an occupant injury upon a collision, said seat assembly comprising:

a seat (16) adapted to be connected to a vehicle (12) including a back portion (18) extending in a substantially upwardly vertical direction from a lower back end (20), and a seat portion (22) extending in a substantially horizontal direction from a rear seat side (24) connected adjacent said lower back end (20) of said back portion (19) and a front seat side (26) opposing said rear seat side (24), and defining a reference point located in proximity to said lower back (20) of said rear seat end (24);

said assembly characterized by including a seat support apparatus (30) operatively connected between said seat (16) and the vehicle to control movement of said seat (16), said seat support apparatus (30) including a forward control apparatus (50) connected adjacent the front seat side (26) constructed to move the front seat side (26) a first vertical distance along a front path and rearward control apparatus (52) constructed to move the rear seat side (24) a second vertical distance along a rear path less than said first vertical distance preventing upward vertical movement of said rear side (24) and so constructed to move the reference point a vertical movement component with respect to forward seat travel substantially zero or in the downward direction preventing movement in the upward vertical direction and a rotational movement component with respect to forward seat travel as linear or upwardly concave in the upwardly vertical direction during substantially the initial half of horizontal seat travel.

14. A vehicle seat assembly adapted to be connected in a vehicle (12) for minimizing occupant injury upon an impact, said seat assembly comprising:

a seat (16) adapted to be connected to a vehicle (12) including a back portion (18) extending in a substantially upwardly vertical direction from a lower back end (20), and a seat portion (22) extending in a substantially horizontal direction from a rear seat side (24) connected adjacent said lower back end (20) of said back portion (18) and a front seat side (26) opposing said rear seat side (24), and defining a central point located in proximity to said lower back end (20) and said rear seat end (24);

said assembly characterized by including a seat support means (30) operatively connected between said seat (16) and the vehicle for controlling movement of said seat (16) with respect to the vehicle (12) upon vehicle impact initially along a substantially straight horizontal path to allow said seat (16) to move with the occupant and subsequently rotating said seat (16) to move the seat side (26) in the upwardly vertical direction with respect to said rear seat side (24) to restrain the occupant.

15. An assembly as set forth in claim 14 wherein said support means (30) includes forward control means (50) connected adjacent said front seat side (26) for moving said front seat side (26) a first vertical distance along a front path and moving said rear seat side (24) a second vertical distance along a rear path less than said first vertical distance while preventing upward vertical movement of said rear seat side (24).

16. An assembly as set forth in clam 15 further characterized by said seat support means (30) including rearward control means (52) connected adjacent said rear seat side (24) for moving the seat (16) defined by said central point following a vertical travel trajectory with respect to horizontal seat travel as being substantially zero or in a downward direction preventing movement in the upwardly vertical direction and having a rotational movement trajectory with respect to horizontal seat travel as being linear or concave extending in the upwardly vertical direction during substantially the initial half of horizontal seat travel.

Top Source
P-312

Fig 1

□ EMBODIMENT #2

○ EMBODIMENT #1

△ EMBODIMENTS #3 AND #4

Fig 2

△ EMBODIMENT #4

○ EMBODIMENT #1

+ EMBODIMENT #2

□ EMBODIMENT #3

Fig 3

11

FORWARD SEAT TRAVEL

EMBODIMENT #1

*Fig 4*

EMBODIMENT #2

*Fig 5*

EMBODIMENT #3

*Fig 6*

EMBODIMENT #4

*Fig 7*

Fig 8

Fig 9

Fig 10

Fig 11

Fig 12

Fig 13

14

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>A | US-A-3 610 679 (LOUIS AMATO)<br>* column 1, line 53 - column 2, line 24; figures 1-7 * | 1<br>12-14 | B60N2/42 |
| A | WO-A-93 01950 (MASSACHUSETTS INSTITUTE OF TECHNOLOGY)<br>* page 6, line 3 - page 8, line 9; figures 1-5 * | 1,12-14 | |
| A | GB-A-1 286 439 (RECARO A.G.) | | |
| A | FR-A-2 224 322 (LEMAIRE FRANÇOIS) | | |
| A,D | US-A-2 102 979 (HARRY M. SMITH) | | |
| A,D | US-A-4 738 485 (ROBERT J. RUMPF) | | |
| A,D | US-A-3 998 291 (EDWIN GEORGE DAVIS) | | |
| A,D | US-A-5 022 707 (RANDALL BEAUVAIS) | | TECHNICAL FIELDS SEARCHED (Int.Cl.6) |
| A,D | US-A-5 244 252 (HECTOR SERHER) | | B60N |

The present search report has been drawn up for all claims

| Place of search | Date of completion of the search | Examiner |
|---|---|---|
| THE HAGUE | 12 October 1995 | Horvath, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)